(19) **Europäisches Patentamt**

**European Patent Office**

**Office européen des brevets**

(11) **EP 0 696 729 B1**

(12) **EUROPÄISCHE PATENTSCHRIFT**

(45) Veröffentlichungstag und Bekanntmachung des Hinweises auf die Patenterteilung:
**12.04.2000  Patentblatt 2000/15**

(51) Int. Cl.$^7$: **G01M 17/007**,  G01M 13/02, G01M 15/00,  G01L 5/28

(21) Anmeldenummer: **94119567.9**

(22) Anmeldetag: **10.12.1994**

(54) **Verfahren und Vorrichtung zur Massensimulation auf ortsfesten Prüfständen**

Procedure and device for simulating mass in a fixed test bench

Procédé et dispositif de simulation de masse dans un banc d'essai fixe

(84) Benannte Vertragsstaaten:
**DE FR GB IT**

(30) Priorität: **09.08.1994 DE 4427966**

(43) Veröffentlichungstag der Anmeldung:
**14.02.1996  Patentblatt 1996/07**

(73) Patentinhaber:
**Schenck Pegasus GmbH**
**66571 Eppelborn (DE)**

(72) Erfinder: **Freitag, Gernot**
**D-64283 Darmstadt (DE)**

(74) Vertreter:
**Brandt, Ernst-Ulrich, Dipl.-Phys., Dipl.-Ing.**
**Schenck Pegasus GmbH**
**64273 Darmstadt (DE)**

(56) Entgegenhaltungen:
EP-A- 0 098 570    DE-A- 3 416 496
DE-A- 3 423 694    US-A- 4 656 576

• **PROCEEDINGS OF THE 1993 AMERICAN CONTROL CONFERENCE, Bd. 1, 2. - 4.Juni 1993, SAN FRANCISCO (US), Seiten 721-725, XP000419195 K. PFEIFFER U.A.: "DRIVER SIMULATION USED IN DYNAMICAL ENGINE TEST STANDS FOR EXHAUST EMISSION TEST CYCLES"**

**Beschreibung**

Die Erfindung betrifft ein Verfahren zur Massensimulation auf ortsfesten Prüfständen gemäß dem Oberbegriff des Patentanspruchs 1 sowie eine Vorrichtung zur Durchführung dieses Verfahrens gemäß dem Oberbegriff des Patentanspruchs 4. Bei der ortsfesten Prüfung von Prüflingen aus dem Kraftfahrzeugbereich besteht das Problem, die im praktischen Betrieb vorkommenden Fahrwiderstände möglichst exakt nachzubilden. Hierzu werden in der Praxis vorzugsweise Rollenprüfstände verwendet, auf denen die Fahrzeuge oder deren Komponenten quasi stationär angeordnet sind. Da diese Fahrzeuge oder deren Komponenten sich auf den Prüfständen nicht wirklich bewegen und die Masse des Prüfstandes in der Regel nicht mit der Fahrzeugmasse übereinstimmt, muß mindestens die Differenzmasse simuliert werden. Auf derartigen Prüfständen können aber auch die übrigen Fahrwiderstände durch Nachbildung eines zusätzlichen Moments simuliert werden. Es gilt daher Kräfte zu simulieren, die sonst auf das Fahrzeug einwirken, wenn es normal auf der Straße fahren würde. Alle translatorischen physikalischen Größen (Fahrzeugmasse, Fahrzeugkraft) werden deshalb auf rotatorische Größen mit Hilfe des Rollenradiuses umgerechnet. Die sich daraus ergebende Differenzmasse zwischen der real vorhandenen Prüfstandsmasse und der zu realisierenden Fahrzeugmasse wird mit einer Belastungseinrichtung elektrisch simuliert. Dabei wird die zu realisierende Differenzmasse über einen dynamischen Regelkreis gesteuert, der ein Belastungsmoment an der Belastungseinrichtung hervorruft. Hier ergeben sich je nach eingesetzten Massensimulationsverfahren bei kleinen oder bei großen positiven Differenzmassen Stabilitäts- und Regelgüteprobleme.

Aus der DE-PS 1 105 637 ist ein sogenanntes differenzierendes Massensimulationsverfahren auf Fahrzeugprüfständen vorbekannt.

Bei diesem Verfahren wird die Differenzmasse durch eine mit den Laufrollen verbundene elektrische Belastungseinrichtung simuliert, die aus einem Leonardsatz besteht. Dabei wird die jeweilige zu simulierende Differenzmasse durch die Aufbringung eines zusätzlichen Drehmoments an der Achse der Prüfstandsrollen mit Hilfe einer Gleichstrommaschine elektrisch simuliert. Hierzu wird das jeweils aufzubringende Belastungsmoment indirekt über die Beschleunigungswirkung der Prüfstandsmasse ermittelt. Bei diesem Prüfstand ist deshalb ein Drehzahlaufnehmer in Form eines Tachogenerators vorgesehen, dessen der Drehzahl proportionale Spannung differenziert und dadurch ein der Beschleunigung proportionales Signal erzeugt wird. In einer Rechenschaltung wird daraus unter Berücksichtigung der bekannten Fahrzeugträgheits- und der bekannten Prüfstandsträgheitsmomente das jeweilige Belastungsmoment ermittelt, das dem Sollwert des zu simulierenden Massenteils entspricht.

Bei dynamischen Fahrversuchen auf einem derartigen Rollenprüfstand wird deshalb das Belastungsmoment über einen Regelkreis nachgesteuert, was insbesondere bei großen Massenunterschieden zwischen der Prüfstandsmasse und der Fahrzeugprüfmasse zu instabilem Reglerverhalten führt.

Aus der DE-PS 27 38 325 C3 ist ein sogenanntes integrierendes Massensimulationsverfahren bekannt. Bei einem derartigen Massensimulationsverfahren wird die zu simulierende Masse aus der Integration des erfaßten Drehmomentes und den bekannten Trägheitsmassen des Fahrzeugs und des Prüfstandes abgeleitet. Bei diesem Prüfstand ist eine Rechenschaltung vorgesehen, die aus dem gemessenen Drehmomentsignal durch Integration eine Solldrehzahl errechnet, die zur Regelung der Belastungseinrichtung dient. Die Massensimulation wird folglich über eine Drehzahlregelung einer Gleichstrommaschine als Belastungseinrichtung erreicht. Eine derartige Massensimulationseinrichtung vermeidet zwar die Nachteile des sogenannten differenzierenden Massensimulationsverfahrens, führt aber insbesondere bei kleinen Massenunterschieden zwischen der Prüfstandsmasse und der Fahrzeugmasse zu einem instabilen Regelungsverhalten.

Es wäre deshalb denkbar, das differenzierende Massensimulationsverfahren mit dem integrierenden Verfahren zu kombinieren. Dabei wären allerdings zwei Reglereinrichtungen erforderlich. In der Praxis hat sich allerdings noch zusätzlich gezeigt, daß insbesondere im Bereich der Überlappung der jeweils ungünstigen Massenunterschiedsbereiche keine ausreichende Regelgüte erreichbar ist. Dies ist insbesondere im Bereich großer Massenunterschiede zwischen der Prüfstandmasse und der Fahrzeugmasse der Fall.

Der Erfindung liegt daher die Aufgabe zugrunde, ein Verfahren und eine Vorrichtung zur Massensimulation zu schaffen, mit der große Bereiche von Massenunterschieden simulierbar sind.

Diese Aufgabe wird durch die in Patentanspruch 1 und 4 angegebene Erfindung gelöst. Weiterbildung und vorteilhafte Ausführungsbeispiele der Erfindung sind in den abhängigen Ansprüchen angegeben. Dabei ist der Kern der Erfindung die Einfügung eines $PT_1$-Dämpfungsgliedes mit variabler Zeitkonstante in den Rückführungskreis der Regeleinrichtung. Dadurch wird eine Regelung erreicht, wobei diese Zeitkonstante von der Differenz der zu simulierenden Trägheitsmassen abhängt. Hierdurch stellt sich bei einer großen Differenz der zu simulierenden Trägheitsmassen eine große Zeitkonstante ein.

Es ist zwar aus der DE-OS 34 16 496 ein Verfahren und eine Schaltungsanordnung zum Simulieren von Prüfstandsträgheitsmomenten bekannt, in der Funktionsglieder mit Zeitkonstanten vorgesehen sind. Allerdings sind diese Funktionsglieder nicht durch die Große der nachzubildenden Trägheitsmassen steuerbar, sondern dienen ausschließlich zur Nachbildung der elastischen Ankopplung zwischen den nachzubildenden Massen eines Antriebsstranges in einem Motorenprüfstand. Derartige Funktionsglieder mit unterschiedlichen Zeitkonstanten zum Simulieren von Prüfstandsträgheitsmomenten sind auch aus dem Artikel "Driver simulation used in dynamical engine test stands for exhaust emission test cycles" von K. Pfeiffer u. a. aus: Proceedings of the 1993 American Control conference, Band 1, 2.-4. Juni 1993, San Francisco, US,Seiten 721-725 bekannt. Allerdings sind auch diese Funktionsglieder nicht durch die Größe der nachzubildenden Trägheitsmassen steuerbar.

Die Erfindung hat den Vorteil, daß über den gesamten Regelbereich eine gleichgroße Regelgeschwindigkeit erreicht wird. Vorteilhaft ist weiterhin, daß die Erfindung leicht in allen Fahrzeugprüfständen nachrüstbar ist, die nach den differenzierenden Verfahren ausgebildet sind.

Im übrigen ist bei der vorstehend genannten erfinderischen Lösung vorteilhaft, daß selbst große zu simulierende Massenunterschiede mit nur einer Regeleinrichtung ausgeregelt werden können und hierzu keine mechanischen Ersatzmassen notwendig sind. Bei besonderen Ausführungen von ortsfesten Prüfständen ist es insbesondere vorteilhaft, daß zur Massensimulation auch bei Flachbahnprüfständen, Motorprüfständen, Getriebeprüfständen und Bremsprüfständen eingesetzt werden kann.

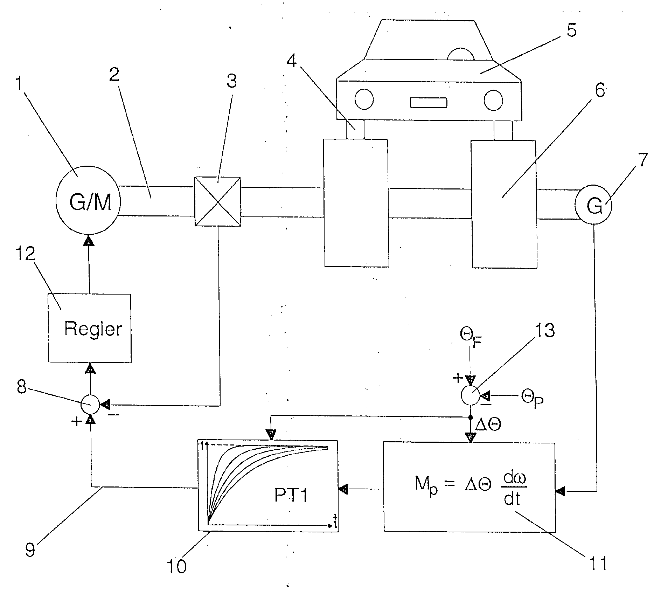

Die Erfindung wird anhand eines Ausführungsbeispiels, das in der Zeichnung dargestellt ist näher erläutert.

Die Zeichnung zeigt eine schematische Darstellung eines Rollenprüfstandes einschließlich des Regelkreises zur Ermittlung und Regelung der zu simulierenden Masse mit Hilfe einer Gleichstrommaschine.

In der Zeichnung ist eine Gleichstrommaschine 1 dargestellt, die über eine Verbindungswelle 2 drehbar mit den Prüfstandsrollen 6 verbunden ist. Auf den Prüfstandsrollen 6 ist ein Fahrzeug 3 schematisch dargestellt, dessen Räder 4 kraftschlüssig mit den Prüfstandsrollen 6 in Verbindung stehen. Die Prüfstandsrollen 6 sind weiterhin über die gleiche Welle mit einer Drehzahlerfassungseinrichtung verbunden, die als Tachogenerator 7 ausgebildet ist.

Zwischen der Gleichstrommaschine 1 und den ihr gegenüber stehenden Prüfstandsrollen 6 ist an der Verbindungwelle 2 ein Drehmomentaufnehmer 3 angeordnet, der elektrisch mit dem Regelkreis 9 verbunden ist. Dabei besteht der Regelkreis 9 aus einem Differenzierglied 11, einem Zeitglied 10 einem Regler 12, einem Subtraktionsglied 13 und einem Verknüpfungspunkt 8, der widerum mit dem Regler 12 elektrisch verbunden ist. Des weiteren ist der Tachogenerator 7 elektrisch mit dem Differenzierglied 11, das Differenzierglied 11 mit dem Zeitglied 10 und der Regler 12 mit dem Zeitglied 10 verbunden. Am Subtraktionsglied 11 sind Eingabemöglichkeiten vorgesehen, aus denen die Massenträgheitsmomente des Prüfstandes und des Fahrzeugs errechenbar sind. Es kann allerdings auch vorgesehen sein, daß diese bekannten Trägheitsmomente direkt eingebbar oder speicherbar sind. Dabei ist das Subtraktionsglied 13 ausgangsseitig mit dem Zeitglied 10 und dem Differenzierglied 11 verbunden.

Die vorstehend beschriebene Einrichtung arbeitet nach folgenden Verfahrungsschritten: Bei der Prüfung eines Fahrzeugs 5 auf dem Rollenprüfstand treibt das Fahrzeug 5 als Prüfling über seine Fahrzeugräder 4 die Prüfstandsrollen 6 an. Dadurch wird gleichzeitig der Tachogenerator 7 und die Gleichstrommaschine 1 über die Verbindungswelle 2 mitbewegt. Der Tachogenerator 7 erzeugt dabei ein Signal, das der Geschwindigkeit bzw. der Winkelgeschwindigkeit ω proportional ist. Das zur Massensimulation erforderliche Belastungsmoment wird mittels der Gleichstrommaschine 1 erzeugt, deren gewünschtes Belastungsmoment durch einen Drehmomentregler 12 gesteuert wird. Mit dem Drehmmomentaufnehmer 3 wird jeweils das Drehmoment der Verbindungswelle 2 erfaßt, das dem Ist-Drehmoment entspricht.

Da am physikalisch vorhandenen Prüfstandsträgheitsmoment $\theta_p$ zwei Drehmomente $M_p$ und $M_F$ angreifen, kann vorausgesetzt werden, daß nur dann eine korrekte Massensimulation vorliegt, wenn das Prüfstandsdrehmoment $M_p$ derart vorgegeben wird, daß das Trägheitsmoment des Prüfstandes $\theta_p$ die gleiche Beschleunigung erfährt wie sie das Fahrzeug 5 auf der Straße unter Einwirkung vom Fahrzeugdrehmoment $M_F$ alleine erfahren würde. Da bei dieser idealen Massensimulation leider das Fahrzeugdrehmoment $M_F$ nur in den seltensten Fällen direkt meßbar ist, muß dieses in der Mehrzahl der Fälle indirekt auf der Basis seiner Beschleunigungswirkung (dω/dt) auf die Prüfstandsträgheitsmasse $\theta_p$ ermittelt werden. Zur mathematischen Ermittlung des Fahrzeugdrehmoments $M_F$ ist davon auszugehen, daß die Massenbeschleunigung des gesamten Prüfstandes so groß ist wie die Beschleunigung des Fahrzeugs 5. Deshalb wird aus der ermittelten Beschleunigung (dω/dt) und dem bekannten Fahrzeugträgheitsmoment $\theta_F$ auf das verursachende gesuchte Fahrzeugdrehmoment $M_F$ geschlossen.

Mathematisch ist deshalb

$$M_p = (\theta_F - \theta_p)\, d\omega/dt.$$

Aus diesem mathematischen Zusammenhang ist schließlich das zu erzeugende Belastungsdrehmoment und die Rollenbeschleunigung im stationären Zustand ableitbar. Dies stellt im Grunde die Struktur der Massensimulation nach dem differenzierenden Verfahren dar. Bei einem solchen Regelverfahren kann also in der Praxis aus der Differenzierung des Winkelgeschwindigkeitssignals (dω/dt) und dem vorgegebenen Massenträgheitsmoment $\theta_F$ des Fahrzeugs 5 und des Prüfstandes $\theta_p$ ein Drehmomentregler 12 konzipiert werden, der das gewünschte Belastungsmoment $M_p$ ermittelt und ausregelt. Dabei wird aus dem differenzierten Winkelgeschwindigkeitssignal (dω/dt) des Tachogenerators 7 und unter Berücksichtung der bekannten Massenträgheitsmomente θ_F des Fahrzeugs 5 und des Prüfstandes θ_P ein variabler Drehmoment-Sollwert ermittelt, der mit dem vom Drehmomentaufnehmer 3 ermittelten Drehmoment als Ist-Drehmoment verglichen wird und bei einer möglichen Abweichung die Belastungsmaschine durch einen Regler 12 so gesteuert, daß dieses Belastungsmoment als Massensimulation wirkt.

Grundidee der Erfindung ist es, den Regelkreis 9 so auszugestalten, daß die variable Sollwertbildung nicht zur Instabilität des Regelkreises 9 führt. Dazu ist in den Regelkreis 9 ein Differenzierglied 11 und ein Subtraktionsglied 13 eingefügt, durch die die Zeitkonstante T des Zeitgliedes 10 synchron mit der Differenz eines variablen Massenträgheitsmomentes Δθ = (θ_F - θ_P) variiert. Deshalb rechnet das Differenzierglied 11 während des Regelungsvorgangs permanent einen variablen Drehmomentsollwert, der mit der vorgegebenen Differenz der Massenträgheitsmomente θ_P variiert. Die Differenz der Massenträgheitsmomente Δθ wird aus den Massenträgheitsmomenten des Fahrzeugs θ_F und des Prüfstandes θ_P durch das Subtraktionsglied 13 errechnet und dient gleichzeitig zur Steuerung des Zeitgliedes 10. Das Zeitglied 10 stellt ein herkömmliches PT1-Glied dar, bei dem die Zeitkonstante T proportional zur Differenz der Massenträgheitsmomente Δθ variiert. Dabei wird durch empirische Ermittlung eine Proportionalitätskonstante c festgelegt, aus der sich die Zeitkonstante T nach der Formel

$$T = c \cdot \Delta\theta$$

ergibt. Da die Zeitkonstante nur positive Werte annehmen kann, ist eine derartige Massensimulation nur für Differenzwerte der Massenträgheitsmomente zulässig, bei denen die Massenträgheitsmomente des Prüflings bzw. des Fahrzeugs θ_F gleich oder größer den Massenträgheitsmomenten des Prüfstandes θ_P sind. Durch geeignete Bemessung des Zeitgliedes ist deshalb ein vorteilhafter Kompromiß zwischen der angestrebten Regelgüte, der Massensimulation und des ausreichend ruhigen, glatten Drehmomentsollwertes erreichbar. Dazu ist für eine hinreichend genaue Massensimulation erforderlich, daß der Verstärkungsfaktor des PT1-Gliedes gleich 1 ist. Durch ein derartig gesteuertes PT1-Glied wird eine Stabilisierung des dynamischen Regelkreises erreicht, der auch große Bereiche von Massenunterschieden ausregeln kann.

Der Regelkreis 9 kann sowohl hardwaremäßig als auch softwaremäßig realisiert werden. Derartige Regelungen zur Massensimulation sind darüberhinaus nicht nur für den vorbeschriebenen Fahrzeugprüfstand, sondern auch bei anderen Prüfständen einsetzbar, bei denen eine Massensimulation vorgenommen werden muß. Insbesondere kommen hierfür Motor-, Getriebe- und Bremsprüfstände in Betracht. Dazu sind dann die Prüflinge drehmomentgekoppelt im Prüfstand anzuordnen.

## Patentansprüche

1. Verfahren zur Massensimulation bei dem eine Belastungseinrichtung (1) mit einem Prüfstand, die mit einem Prüfling (5) kraftschlüssig in Verbindung steht geregelt wird, wobei deren Ist-Geschwindigkeit oder ein Wert der der Geschwindigkeit proportional ist erfaßt und daraus ein Drehmoment-Sollwert ermittelt und mit einem erfaßten Drehmoment-Istwert verglichen und deren Abweichung ausgeregelt wird, dadurch gekennzeichnet, daß der Drehmoment-Sollwert mit Hilfe eines gesteuerten Zeitgliedes (10) gebildet wird, wobei die Zeitkonstante des Zeitgliedes (10) synchron mit der Differenz des Massenträgheitsmomentes des Prüflings (5) und des Prüfstandes variiert.

2. Verfahren nach Patentanspruch 1, dadurch gekennzeichnet, daß der Drehmoment-Sollwert durch eine Differenzierung der Winkelgeschwindigkeit einer Prüfstandsrolle (6) als ein Wert der der Geschwindigkeit proportional ist unter Berücksichtigung der bekannten Massenträgheitsmomente des Prüflings (5) und des Prüfstandes ermittelt und die Zeitkonstante des Zeitgliedes (10) durch die vorgegebene Differenz des Trägheitsmomentes des Prüflings (5) und des Prüfstandes gesteuert wird, wobei die Differenz der Massenträgheitsmomente gleich oder größer Null ist.

3. Verfahren nach Anspruch 2, dadurch gekennzeichnet, daß die Massensimulation durch die Erfassung der Winkelgeschwindigkeit an der Prüfstandsrolle (6) eines Fahrzeugprüfstandes ermittelt wird, der von Fahrzeugrädern (4) antreibbar ist, wobei das der Massensimulation entsprechende Belastungsmoment von einer Belastungseinrichtung (1) erzeugt wird, die mit den Prüfstandsrollen (6) kraftschlüssig gekoppelt ist, wobei das Belastungsmoment über einen Regelkreis (9) gesteuert wird, der aus den Winkelgeschwindigkeitssignalen unter Berücksichtigung der vorgegebenen Massenträgheitsmomente des Prüflings (5) oder deren Komponenten und des Prüfstandes einen variablen Drehmoment-Sollwert ermittelt, wobei der Drehmomentsollwert mit Hilfe eines Zeitgliedes (10) gebildet wird, dessen Zeitkonstante durch die Differenz der vorgegebenen Massenträgheitsmomente gesteuert wird, der mit einem in der gekoppelten Verbindung erfaßten Drehmoment-Istwert verglichen wird und bei einer Abweichung ein Korrekturmoment bildet, das ein der Massensimulation entsprechendes Belastungsmoment darstellt.

4. Vorrichtung zur Durchführung des Verfahrens nach einem der Ansprüche 1 bis 3, <u>dadurch gekenn-zeichnet,</u> daß zur Massensimulation eine Belastungsvorrichtung (1) mit Prüfstand kraftschlüssig mit einem Prüfling (5) gekoppelt ist, wobei die Prüfgeschwindigkeit mit Hilfe einer Geschwindigkeitserfassungsvorrichtung (7) ermittelt wird, die mit einem Rückführkreis verbunden ist, der ein Differenzierglied (11), ein gesteuertes Zeitglied (10) und einen Regler (12) enthält, der mit der Belastungsvorrichtung (1) verbunden ist, wobei zwischen dem Regler (12) und dem gesteuerten Zeitglied (10) ein Verknüpfungspunkt (8) angeordnet ist, der mit einem Drehmomentaufnehmer (3) in Verbindung steht, wobei die Zeitkonstante des Zeitgliedes (10) synchron mit der Differenz des Massenträgheitsmomentes des Prüflings (5) und des Prüfstandes variiert.

5. Vorrichtung nach Anspruch 4, <u>dadurch gekennzeichnet,</u> daß im Rückführkreis als Zeitglied (10) ein PT1-Glied angeordnet ist, dessen Zeitkonstante von einem in dem Rückführkreis angeordneten Subtraktionsglied (13) gesteuert wird, das aus den vorgegebenen Massenträgheitsmomenten des Prüflings (5) und eines Prüfstandes einen Differenzwert bildet.

6. Vorrichtung nach Anspruch 4 oder 5, <u>dadurch gekennzeichnet,</u> daß der Rückführkreis aus einem Differenzierglied (11), einem Subtraktionsglied (13) und einem Zeitglied (10) besteht.

7. Vorrichtung nach Anspruch 6, <u>dadurch gekennzeichnet,</u> daß der Rückführkreis als ein elektrischer Schaltkreis ausgebildet ist, in dem das Differenzierglied (11), das Subtraktionsglied (13) und das Zeitglied (10) integriert sind.

8. Vorrichtung nach einem der vorgehenden Ansprüche 4 bis 7, <u>dadurch gekennzeichnet,</u> daß der Rückführkreis mit Regler (12) und Verknüpfungspunkt (8) aus einer programmierbaren Rechenschaltung besteht, dem ein der Geschwindigkeit des Prüflings entsprechendes Signal, ein dem Drehmoment-Istwert entsprechendes Signal der kraftschlüssigen Kopplung und den der vorgegebenen Massenträgheit des Prüflings und der Prüfvorrichtung entsprechende Signal eingegeben werden und die über ein vorgegebenes Programm daraus das Belastungsmoment ermittelt und die Belastungsvorrichtung (1) entsprechend steuert.

**Claims**

1. A procedure for simulating mass, in which a loading device (1) including a test stand connected non-positively to a test piece (5) is regulated, wherein a value representing the instantaneous speed of the test piece or a value proportional to the speed thereof is acquired, and a reference torque value is determined therefrom and compared with a detected instantaneous torque value and a deviation therebetween is corrected, characterised in that the reference torque value is formed with the aid of a controlled timing member (10) whereby the time constant of the timing member (10) is varied in synchronism with the difference between the mass moments of inertia of the test piece (5) and the test stand.

2. A procedure in accordance with Claim 1, characterised in that the reference torque value is determined by differentiating the angular speed of a test stand roller (6) as being a value which is proportional to the speed whilst taking into account the known mass moments of inertia of the test piece (5) and the test stand, and the time constant of the timing member (10) is controlled by the pre-established difference between the moments of inertia of the test piece (5) and the test stand, whereby the difference in the mass moments of inertia is equal to or greater than zero.

3. A procedure in accordance with Claim 2, characterised in that the mass simulation is determined by detecting the angular speed of the test stand rollers (6) of a vehicle test stand which is adapted to be driven by the wheels (4) of a vehicle, whereby the moment of load corresponding to the mass simulation is produced by a loading device (1) which is coupled in non-positive manner to the test stand rollers (6), whereby the moment of load is controlled by a regulating circuit (9) which produces a variable reference torque value from the angular speed signals taking into account the preestablished mass moments of inertia of the test piece (5) or its components and the test stand, whereby the torque reference value is formed with the aid of a timing member (10) whose time constant is controlled by the difference in the pre-established mass moments of inertia, said reference value is compared with the instantaneous value of the torque as detected in the coupled connection, and a correcting moment representing a moment of load corresponding to the mass simulation is formed in the event of a deviation.

4. A device for carrying out the procedure in accordance with any one of the Claims 1 to 3, characterised in that, for the purposes of simulating mass, a loading device (1) including a test stand is coupled non-positively to a test piece (5), wherein the test speed is determined with the aid of a speed detecting device (7) that is connected to a feedback circuit incorporating a differentiating member (11), a controlled timing member (10) and a regulator (12) which is connected to the loading device (1), wherein a nodal point (8) connected to a torque sensor (3) is arranged between the regulator (12) and the controlled timing member (10), whereby the time constant of the timing member (10) is varied in synchronism with the difference between the mass moments of inertia of the test piece (5) and the test stand.

5. A device in accordance with Claim 4, characterised in that a PT1 member serving as the timing member (10) is disposed in the feedback circuit and the time constant thereof is controlled by a subtracting member (13) which is arranged in the feedback circuit and forms a difference value from the pre-established mass moments of inertia of the test piece (5) and a test stand.

6. A device in accordance with Claim 4 or 5, characterised in that the feedback circuit consists of a differentiating member (11), a subtracting member (13) and a timing member (10).

7. A device in accordance with Claim 6, characterised in that the feedback circuit is in the form of an electrical circuit in which the differentiating member (11), the subtracting member (13) and the timing member (10) are integrated.

8. A device in accordance with any one of the preceding Claims 4 to 7, characterised in that the feedback circuit including the regulator (12) and the nodal point (8) consists of a programmable arithmetic circuit to which a signal corresponding to the speed of the test piece, a signal from the non-positive coupling corresponding to the instantaneous value of the torque, and the signal corresponding to the pre-established moments of inertia of the test piece and the test device are provided, and which determines the moment of load therefrom using a predetermined program and controls the loading device (1) accordingly.

**Revendications**

1. Procédé de simulation de masse dans lequel on règle un dispositif de charge (1) qui comporte un banc d'essai et qui est en liaison de transmission de force avec un échantillon (5), sa vitesse réelle ou une valeur proportionnelle à la vitesse étant détectée et à partir de celle-ci une valeur de consigne du couple de rotation étant déterminée et comparée à une valeur réelle détectée du couple de rotation et leur écart étant réglé, caractérisé en ce que la valeur de consigne du couple de rotation est formée à l'aide d'un organe de temporisation (10) commandé, la constante de temps de l'organe de temporisation (10) étant modifiée de manière synchrone avec la différence des moments d'inertie de masse de l'échantillon (5) et du banc d'essai.

2. Procédé selon la revendication 1, caractérisé en ce que la valeur de consigne du couple de rotation est déterminée par différentiation de la vitesse angulaire d'un rouleau (6) du banc d'essai en tant que valeur proportionnelle à la vitesse, en tenant compte des moments d'inertie de masse connus de l'échantillon (5) et du banc d'essai, et la constante de temps de l'organe de temporisation (10) est réglée par la différence prédéterminée des moments d'inertie de l'échantillon (5) et du banc d'essai, la différence des moments d'inertie de masse étant égale ou supérieure à zéro.

3. Procédé selon la revendication 2, caractérisé en ce que la simulation de masse est déterminée par détection de la vitesse angulaire sur le rouleau (6) d'un banc d'essai de véhicule, qui peut être entraînée par les roues (4) du véhicule, le moment de charge correspondant à la simulation de masse étant produit par un dispositif de charge (1) qui est accouplé avec transmission de force aux rouleaux (6) du banc d'essai, le moment de charge étant réglé par l'intermédiaire d'un circuit de régulation (9) qui détermine une valeur de consigne variable du couple de rotation à partir des signaux de vitesse angulaire, en tenant compte des moments d'inertie de masse prédéterminés de l'échantillon (5) ou de ses composants et du banc d'essai, la valeur de consigne du couple de rotation étant formée à l'aide d'un organe de temporisation (10) dont la constante de temps est réglée par la différence entre les moments d'inertie de masse prédéterminés, la valeur de consigne du couple de rotation étant comparée à une valeur réelle du couple de rotation détectée dans la liaison d'accouplement à force, et en cas d'écart, un moment de correction étant formé qui représente un moment de charge correspondant à la simulation de masse.

4. Dispositif pour la mise en oeuvre du procédé selon l'une des revendications 1 à 3, caractérisé en ce que pour la simulation de masse, un dispositif de charge (1) avec banc d'essai est accouplé avec transmission de force à un échantillon (5), la vitesse d'essai étant déterminée à l'aide d'un dispositif de mesure de vitesse (7) qui est relié à un circuit de rétroaction, lequel contient un organe différentiateur (11), un organe de temporisation (10) commandé et un organe de réglage (12) qui est relié au dispositif de charge (1), entre l'organe de réglage (12) et l'organe de temporisation (10) commandé étant disposé un point de liaison (8) qui est en liaison avec un capteur de couple de rotation (3), la constante de temps de l'organe de temporisation (10) étant modifiée de manière synchrone avec la différence des moments d'inertie de masse de l'échantillon (5) et du banc d'essai.

**5.** Dispositif selon la revendication 4, caractérisé en ce que dans le circuit de rétroaction est disposé, en tant qu'organe de temporisation (10), un organe PT1 dont la constante de temps est réglée par un organe de soustraction (13) qui est disposé dans le circuit de rétroaction et qui forme une valeur différentielle à partir des moments d'inertie de masse prédéterminés de l'échantillon (5) et d'un banc d'essai.

**6.** Dispositif selon la revendication 4 ou 5, caractérisé en ce que le circuit de rétroaction est constitué d'un organe différentiateur (11), d'un organe de soustraction (13) et d'un organe de temporisation (10).

**7.** Dispositif selon la revendication 6, caractérisé en ce que le circuit de rétroaction est réalisé sous la forme d'un circuit de commutation électrique dans lequel l'organe différentiateur (11), l'organe de soustraction (13) et l'organe de temporisation (10) sont intégrés.

**8.** Dispositif selon l'une des revendications 4 à 7 précédentes, caractérisé en ce que le circuit de rétroaction avec l'organe de réglage (12) et le point de liaison (8) sont constitués d'un circuit de calcul programmable dans lequel sont introduits un signal correspondant à la vitesse de l'échantillon, un signal correspondant à la valeur réelle du couple de rotation de l'accouplement avec transmission de force et le signal correspondant à l'inertie de masse prédéterminée de l'échantillon et du dispositif d'essai, et qui détermine le moment de charge à partir de ceux-ci au moyen d'un programme prédéterminé et qui commande le dispositif de charge (1) en conséquence.

$$M_p = \Delta\Theta \, \frac{d\omega}{dt}$$